Europäisches Patentamt

European Patent Office

Office européen des brevets

(11) Numéro de publication: **0 476 593 A1**

## (12) DEMANDE DE BREVET EUROPEEN

(21) Numéro de dépôt: 91115762.6

(22) Date de dépôt: 17.09.91

(51) Int. Cl.5: **G01G 19/00**, G01G 19/414, G06F 3/023

(30) Priorité: **21.09.90 FR 9011684**

(43) Date de publication de la demande:
**25.03.92 Bulletin 92/13**

(84) Etats contractants désignés:
**DE FR GB**

(71) Demandeur: **ALCATEL SATMAM**
**113 rue Jean-Marin Naudin**
**F-92220 Bagneux(FR)**

(72) Inventeur: **Fajour, Michel**
**38, rue des Pierrelais**
**F-92320 Chatillon Sous Bagneux(FR)**
Inventeur: **Vanpoucke, Jean-François**
**16, résidence Les Gros Chênes**
**F-91370 Verrieres le Buisson(FR)**

(74) Mandataire: **Weinmiller, Jürgen et al**
**Lennéstrasse 9 Postfach 24**
**W-8133 Feldafing(DE)**

(54) **Balance postale électronique.**

(57) Balance postale électronique comprenant un plateau de pesage, un clavier et au moins un écran
d'affichage, le clavier, l'écran et le plateau de pesage étant reliés à un processeur électronique programmé ayant des mémoires contenant les données
de tarification en fonction de la nature du produit
postal et des services postaux utilisés, le clavier
comportant notamment des touches sur lesquelles
sont inscrites respectivement les catégories de destination, les modes d'expédition, les divers types de
produit postal, les services offerts par l'Administration postale, caractérisée en ce que le clavier comprend des touches réservées (5), connectées au
processeur et mises en service, lors d'une modification ou d'un changement des services offerts, par
insertion d'un module électronique (6) muni d'un
programme complémentaire, la ou les touches
concernées par le programme complémentaire étant
repérées par l'utilisateur au moyen d'une feuille (8)
ou capot (7) recouvrant le clavier et portant les
mentions correspondant aux nouvelles touches opérationnelles.

FIG. 2

EP 0 476 593 A1

La présente invention concerne une balance postale électronique.

On connaît bien la balance électronique, souvent destinée à être couplée à un système électronique d'affranchissement, et qui comprend un plateau de pesage, un clavier d'entrée de données et un écran d'affichage, ces éléments étant en liaison avec un processeur électronique contenant des données de tarification postale en fonction du poids de l'objet expédié, de la destination et de la nature du service offert par le service postal.

Jusqu'à ce jour, les services offerts par la poste sont imprimés en clair sur certaines touches du clavier, l'utilisateur se reportant à la notice émise par l'Administration pour connaître avec exactitude la prestation émise, par exemple savoir s'il s'agit d'une expédition normale, rapide ou accélérée, s'il s'agit d'un tarif normal ou économique, etc...

Les claviers sont des organes relativement coûteux qui rentrent pour une bonne part dans le prix de revient d'une balance électronique; leur confection en série nécessite en effet des travaux de sérigraphie qui ne sont économiques que s'ils portent sur un nombre élevé d'appareils. Or, tout changement dans les services offerts par l'Administration postale entraîne la nécessité de remplacer le clavier des balances existantes, ce qui est un travail considérable en raison du grand nombre de machines en service; par ailleurs, le stock de claviers en attente de montage sur les balances nouvelles nécessite également des modifications.

Un but de la présente invention est de réaliser une balance électronique qui en cas de changement des services de l'Administration postale (modification, suppression ou adjonction) puisse encore être utilisée moyennant une modification de coût minime.

La présente invention a pour objet une balance postale électronique comprenant un plateau de pesage, un clavier et au moins un écran d'affichage, le clavier, l'écran et le plateau de pesage étant reliés à un processeur électronique programmé ayant des mémoires contenant les données de tarification en fonction de la nature du produit postal et des services postaux utilisés, le clavier comportant notamment des touches sur lesquelles sont inscrites respectivement les catégories de destination, les modes d'expédition, les divers types de produit postal, les services offerts par l'Administration postale, caractérisée en ce que le clavier comprend des touches réservées, connectées au processeur et mises en service, lors d'une modification ou d'un changement des services offerts, par insertion d'un module électronique muni d'un programme complémentaire, la ou les touches concernées par le programme complémentaire étant repérées par l'utilisateur au moyen d'une feuille ou capot recouvrant le clavier et portant les mentions correspondant au nouveaux services.

Avantageusement, ledit capot ou ladite feuille est en matériau suffisamment translucide pour permettre la lecture par l'opérateur des mentions portées sur les touches du clavier.

En variante, le capot ou la feuille sont opaques et portent à la fois les mentions relatives aux touches utilisées avant et après modification ou changement et celles relatives aux touches utilisées seulement après modification ou changement.

L'invention sera bien comprise par la description donnée ci-après d'un exemple de réalisation de l'invention, en référence au dessin annexé dans lequel:

- la figure 1 est une vue de dessus du clavier d'une balance électronique selon l'art connu,
- la figure 2 est une vue schématique en perspective du clavier d'une balance électronique selon l'invention, au cours de l'installation d'un capot.
- la figure 3 est une vue schématique en perspective du clavier d'une balance électronique selon une variante de réalisation de l'invention.

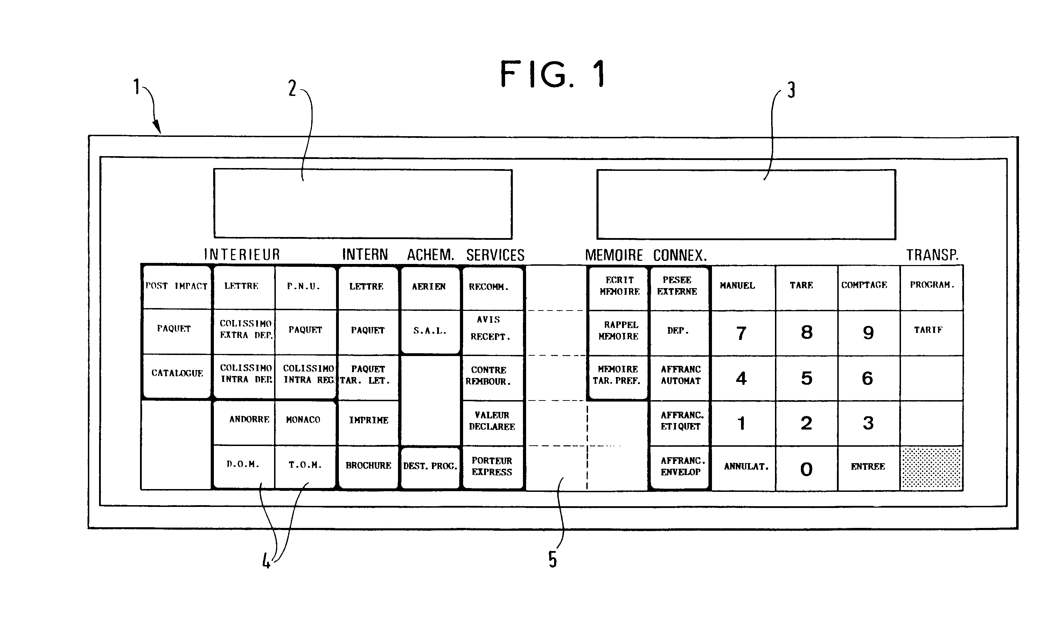

Dans la figure 1, la référence 1 désigne globalement le clavier d'une balance postale électronique dont le plateau de pesage n'a pas été représenté. Le clavier est associé à des écrans d'affichage 2 et 3 et comprend un certain nombre de touches 4 indiquant notamment les lieux de destination, la nature du produit postal et les services offerts par l'Administration. D'autres touches portent simplement des chiffres et sont utilisées par l'opérateur en particulier pour le codage des pays de destination. D'autres touches enfin, servent lorsque la balance est reliée à une machine à affranchir.

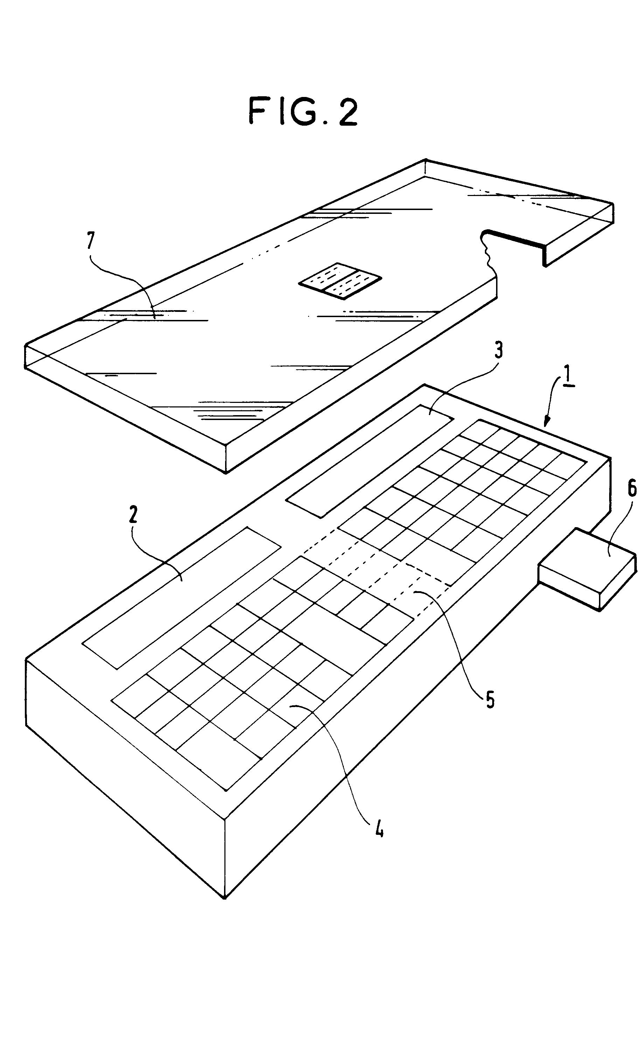

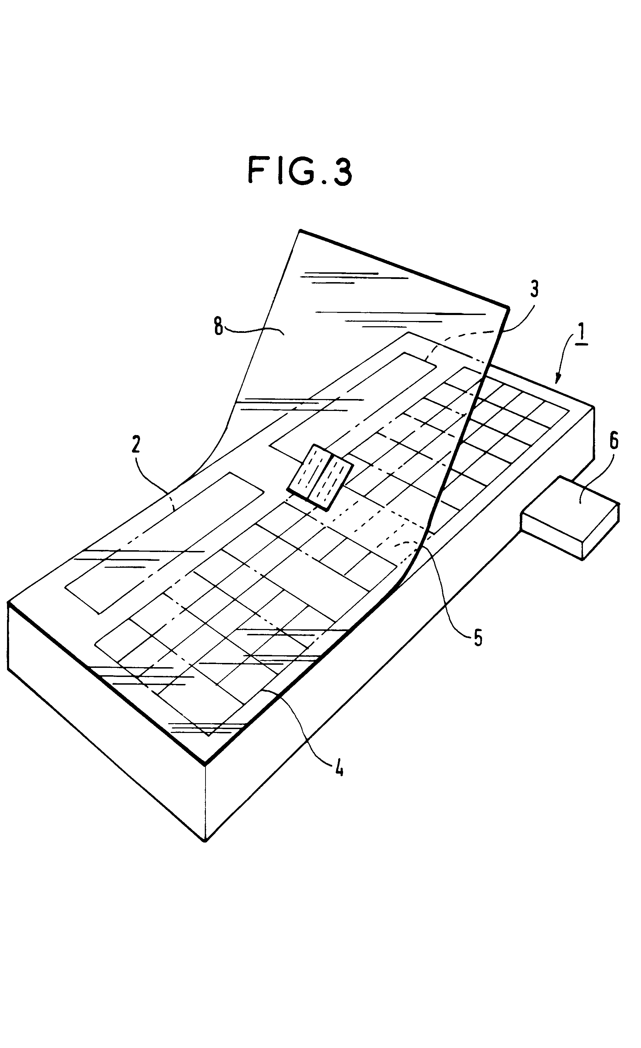

Certaines des touches correspondent, comme il a été indiqué ci-dessus, à des services particuliers de l'Administration, comme par exemple le service COLISSIMO extradépartemental qui concerne un paquet acheminé rapidement (J + 2 garanti par les Services Postaux), vers une destination située en métropole mais à l'extérieur du département d'envoi. Si l'Administration vient à créer un autre service, correspondant à des prestations différentes, le clavier ci-dessus doit être modifié, ce qui est une contrainte onéreuse, comme il a été expliqué plus haut. Le clavier de la balance de l'invention, représenté dans la figure 2, comprend des touches de réserve 5, marquées en traits tiretés dans les figures 2 et 3; ces touches sont reliées au processeur mais inopérantes; elles sont rendues opérationnelles lorsqu'apparaît un nouveau service de l'Administration. On utilise alors un module électronique 6 enfichable, qui injecte dans le processeur le sous-programme supplémentaire correspondant. Les nouvelles touches en service sont repérées par l'utilisateur de la façon suivante: on recouvre le clavier d'un capot 7 (figure 2) ou d'une feuille autocollante 8 (figure 3) venant s'ajuster sur le clavier. Le capot ou la feuille peuvent être translucides ou transparents et ne porter que l'impression des nouvelles touches en service, les anciennes touches utilisables étant visibles par transparence. C'est le cas des figures 2 et 3 dans lesquelles on a montré que les deux touches en haut de la colonne des touches supplémentaires étaient mises en service. Dans ce mode de réalisation, le capot ou feuille peuvent porter un masque opaque au droit des touches qui ne seraient plus utilisées.

En variante, le capot ou la feuille sont opaques et portent l'impression des touches opérationnelles, y compris celle des nouvelles touches en service.

L'invention s'applique à toute balance électronique pour usage postal.

**Revendications**

1. Balance postale électronique comprenant un plateau de pesage, un clavier et au moins un écran d'affichage, le clavier, l'écran et le plateau de pesage étant reliés à un processeur électronique programmé ayant des mémoires contenant les données de tarification en fonction de la nature du produit postal et des services postaux utilisés, le clavier comportant notamment des touches sur lesquelles sont inscrites respectivement les catégories de destination, les modes d'expédition, les divers types de produit postal, les services offerts par l'Administration postale, caractérisée en ce que le clavier comprend des touches réservées (5), connectées au processeur et mises en service, lors d'une modification ou d'un changement des services offerts, par insertion d'un module électronique (6) muni d'un programme complémentaire, la ou les touches concernées par le programme complémentaire étant repérées par l'utilisateur au moyen d'une feuille (8) ou capot (7) recouvrant le clavier et portant les mentions correspondant au nouvelles touches opérationnelles.

2. Balance selon la revendication 1, caractérisée en ce que ledit capot (7) ou ladite feuille (8) est en matériau suffisamment translucide pour permettre la lecture par l'opérateur des mentions portées sur les touches (4) du clavier.

3. Balance selon la revendication 2, caractérisée en ce que le capot (7) ou feuille (8) peuvent porter un masque opaque au droit des touches qui ne seraient plus utilisées.

4. Balance selon la revendication 1, caractérisée en ce que le capot (7) ou la feuille (8) sont opaques et portent à la fois les mentions relatives aux touches (4) utilisées avant et après modification ou changement et celles relatives aux touches (5) utilisées seulement après modification ou changement.

# FIG. 1

| INTERIEUR | | | INTERN | ACHEM. | SERVICES | | MEMOIRE CONNEX. | | | | | TRANSP. |
|---|---|---|---|---|---|---|---|---|---|---|---|---|
| POST IMPACT | LETTRE | P.N.U. | LETTRE | AERIEN | RECOMM. | | ECRIT MEMOIRE | PESEE EXTERNE | MANUEL | TARE | COMPTAGE | PROGRAM. |
| PAQUET | COLISSIMO EXTRA DEP. | PAQUET | PAQUET | S.A.L. | AVIS RECEPT. | | RAPPEL MEMOIRE | DEP. | 7 | 8 | 9 | TARIF |
| CATALOGUE | COLISSIMO INTRA DEP. | COLISSIMO INTRA REG. | PAQUET TAR. LET. | | CONTRE REMBOUR. | | MEMOIRE TAR. PREF. | AFFRANC AUTOMAT | 4 | 5 | 6 | |
| | ANDORRE | MONACO | IMPRIME | | VALEUR DECLAREE | | | AFFRANC. ETIQUET | 1 | 2 | 3 | |
| | D.O.M. | T.O.M. | BROCHURE | DEST. PROG. | PORTEUR EXPRESS | | | AFFRANC. ENVELOP | ANNULAT. | 0 | ENTREE | |

# FIG. 2

# FIG.3

**Office européen des brevets**

# RAPPORT DE RECHERCHE EUROPEENNE

Numéro de la demande

## EP 91 11 5762

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 083 252   (PITNEY BOWES INC.)<br>* page 10, ligne 25 - ligne 28 * * * page 13, ligne 4 - ligne 20 *<br>* | 1 | G 01 G 19/00<br>G 01 G 19/414<br>G 06 F 3/023 |
| | – – – | | |
| Y | EP-A-0 325 757   (BIZERBA-WERKE WILHELM KRAUT)<br>* abrégé; figure 1 * * | 1 | |
| | – – – | | |
| A | EP-A-0 197 253   (METTLER INSTRUMENTE AG)<br>* page 2, ligne 6 - ligne 9; figure 2 * * | 1 | |
| | – – – | | |
| A | DE-U-8 700 968   (A. SAUTER GMBH)<br>* revendication 1; figure 1 * * | 2-4 | |
| | – – – | | |
| A | US-A-4 084 242   (J.A. CONTI)<br>* colonne 1, ligne 17 - ligne 19 * * * colonne 1, ligne 43 - colonne 2, ligne 9; figure 1 * * | 1 | |
| | – – – | | |
| A | US-A-4 462 473   (J.C. VALESTIN)<br>* colonne 1, ligne 46 - ligne 49 * * * colonne 9, ligne 29 - colonne 10, ligne 3 * * | 1 | |
| | – – – – – | | |

**DOMAINES TECHNIQUES RECHERCHES (Int. Cl.5)**

G 01 G
G 06 F
G 07 B
H 01 H

Le présent rapport de recherche a été établi pour toutes les revendications

| Lieu de la recherche | Date d'achèvement de la recherche | Examinateur |
|---|---|---|
| La Haye | 19 décembre 91 | GANCI P.A. |